# EUROPEAN PATENT APPLICATION

(11) **EP 4 733 160 A1**
(43) Date of publication of application: **29.04.2026**
(21) Application number: 24209186.6
(22) Date of filing: 28.10.2024
(51) Int. Cl.: B60T 17/06

(54) **A BRACKET ASSEMBLY AND A METHOD FOR MOUNTING A VEHICLE COMPONENT**

(71) Applicant: Volvo Truck Corporation, 405 08 Göteborg (SE)
(72) Inventor: RUFFATTO, Vagner, 81020490 CURITIBA (BR); BJÖRKENFORS, Jonas, 461 53 TROLLHÄTTAN (SE); BOISEN, Mikael, 417 44 GÖTEBORG (SE); ERBESDOBLER, Ricardo, 82015160 CURITIBA (BR)
(74) Representative: Kransell & Wennborg KB

(57) **Abstract**

A bracket assembly for mounting of at least one component to a vehicle structure (4), comprising:
an interface bracket arrangement (110) for attachment to the vehicle structure (4), comprising a stopping member (113),
a component mounting bracket arrangement (120) for attaching at least a first component, comprising a first hook (121b) and a second hook (122), and being configured to be brought to a fixed state by attaching it to the interface bracket arrangement by fasteners, and to be brought to a tiltable state by releasing the fasteners,
wherein, in the tiltable state, the first hook is configured to engage with the vehicle structure to enable tilting of the component mounting bracket arrangement relative to the interface bracket,
wherein the second hook engages with the stopping member during the tilting of the component mounting bracket arrangement to hold it in a fixed intermediate tilt position defined by the second hook.

## Description

### TECHNICAL FIELD

The disclosure relates generally to mounting of components to vehicles. In particular aspects, the disclosure relates to a bracket assembly for mounting of at least one component to a vehicle structure, a method for mounting of at least one component to a vehicle structure, and a method for servicing at least one component mounted to a vehicle structure. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Service and maintenance of a single vehicle component often require that other components are demounted in order to access the component to be serviced. This complicates the service process and increases downtime of the vehicle.

### SUMMARY

According to a first aspect of the disclosure, a bracket assembly for mounting of at least one component to a vehicle structure is provided. The bracket assembly comprises:
an interface bracket arrangement for attaching the bracket assembly to the vehicle structure, the interface bracket arrangement comprising at least one stopping member,
a component mounting bracket arrangement for attaching at least a first component to the bracket assembly, wherein at least one first hook is disposed on a first end portion of the component mounting bracket arrangement, and at least one second hook is disposed on the component mounting bracket arrangement at a distance from the first end portion,
wherein the component mounting bracket arrangement is configured to be brought to a fixed state by attaching it to the interface bracket arrangement by a first set of fasteners, and to be brought to a tiltable state by releasing the first set of fasteners,
wherein, in the tiltable state, the at least one first hook is configured to engage with the vehicle structure to enable tilting of the component mounting bracket arrangement relative to the interface bracket arrangement about a pivot axis defined by the at least one first hook,
wherein the at least one second hook is configured to engage with the at least one stopping member during the tilting of the component mounting bracket arrangement to hold the component mounting bracket arrangement in at least one fixed intermediate tilt position defined by the at least one second hook.

The first aspect of the disclosure may seek to provide an in at least some aspect improved bracket assembly for mounting of vehicle components to a vehicle structure, such as to a vehicle frame of a heavy-duty vehicle. In particular, the first aspect may seek to provide such a bracket assembly which facilitates service and maintenance of the mounted vehicle components. A technical benefit may include the provision of a bracket assembly that on one hand enables secure mounting of at least one component to the vehicle structure, and that on the other hand facilitates service by enabling the tilting of the component mounting bracket arrangement, and the component(s) mounted thereto, relative to the vehicle structure by simply releasing the first set of fasteners. The interface bracket arrangement may during the service remain fixed to the vehicle structure and the component(s) to be serviced may remain fixed to the component mounting bracket arrangement. Hence, the component to be serviced may easily be accessed without completely removing it from the vehicle. After having serviced the component(s), the component mounting bracket arrangement may easily be reattached to the interface bracket arrangement using the first set of fasteners, thereby securely fixing the component(s) with respect to the vehicle structure.

The bracket assembly may, purely by way of example, be used for mounting of at least two components to the vehicle structure, such as of an electric motor, e.g., a steering motor, and a tank, e.g., a fluid tank such as a compressed air tank or a hydraulic fluid tank.

Optionally in some examples, including in at least one preferred example, the at least one second hook is configured to enable disengagement of the at least one second hook from the at least one stopping member to bring the component mounting bracket assembly to a rotatable state in which only the at least one first hook is configured to hold the component mounting bracket arrangement to the vehicle structure. A technical benefit may include facilitated maintenance or adjustments of the mounted component(s) in the rotatable state.

Optionally in some examples, including in at least one preferred example, in the rotatable state, the at least one first hook is configured to enable free rotation of the component mounting bracket arrangement about the pivot axis over an angular range of at least 90°. A technical benefit may include increased accessibility for servicing the component(s) mounted using the bracket assembly.

Optionally in some examples, including in at least one preferred example, the at least one second hook is configured to define at least a first fixed intermediate tilt position and a last fixed intermediate tilt position. The at least one second hook may further be configured to define at least one additional fixed intermediate tilt position between the first and last fixed intermediate tilt positions. A technical benefit may include multiple stable positions for controlled adjustments during the servicing process.

Optionally in some examples, including in at least one preferred example, the first fixed intermediate tilt position is at a tilting angle of 2-6°, preferably 3-5°, and the last fixed intermediate tilt position is at a tilting angle of 10-30°, preferably 15-20°. Actual angular ranges may be tailored in dependence on needs and conditions of the present application, such as depending on available space, the component(s) mounted, tools to be used, etc. A technical benefit of providing the first fixed intermediate tilt position at a relatively small tilting angle may include improved control in the tilting process. The larger last fixed intermediate tilt position may be suitable for detachment of hoses, electrical cales and similar before bringing the component mounting bracket assembly to the rotatable state.

Optionally in some examples, including in at least one preferred example, the at least one second hook is configured to be disengaged from the at least one stopping member by pushing the component mounting bracket arrangement away from the at least one stopping member when the component mounting bracket arrangement is in the last fixed intermediate tilt position. Similarly, a transition from the first fixed intermediate tilt position to a subsequent intermediate tilt position, such as the last fixed intermediate tilt position, may be triggered by pushing the component mounting bracket arrangement away from the at least one stopping member. Hence, the at least one first hook is configured to allow linear displacements of the component mounting bracket arrangement that are large enough to push the at least one second hook off the at least one stopping member. A technical benefit may include easier transition between tilt positions without requiring specific tools.

Optionally in some examples, including in at least one preferred example, the at least one second hook is configured to automatically bring the component mounting bracket arrangement to the first fixed intermediate tilt position when the first set of fasteners is released and gravity acts on the component mounting bracket arrangement. A technical benefit may include improved safety and ergonomics during service, since the component mounting bracket arrangement and the component(s) mounted thereto are automatically stopped at a relatively small tilting angle when the first set of fasteners is removed.

Optionally in some examples, including in at least one preferred example, the at least one second hook protrudes perpendicularly from a contact surface of the component mounting bracket arrangement, wherein the contact surface is configured to abut the interface bracket arrangement in the fixed state.

Optionally in some examples, including in at least one preferred example, each one of the at least one second hook comprises first and second projections projecting away from the at least one first hook, the first and second projections defining first and last fixed intermediate tilt positions, respectively. In some examples, more than two projections may be provided on each hook, hence providing more than two fixed intermediate tilt positions. A technical benefit may include provision of at least two fixed intermediate tilt positions.

Optionally in some examples, including in at least one preferred example, each one of the at least one second hook comprises a smooth surface connecting the first and second projections, and wherein the at least one stopping member is configured to slide along the smooth surface during tilting of the component mounting bracket arrangement from the first to the last fixed intermediate tilt position. A technical benefit may include smooth transitions between tilt positions, minimizing wear.

Optionally in some examples, including in at least one preferred example, the component mounting bracket arrangement comprises a first component mounting interface for mounting of the first component, and a second component mounting interface for mounting of a second component. A technical benefit may include the ability to accommodate multiple components, enhancing the functionality of the bracket assembly and facilitating mounting of components during assembly of the vehicle, since two components may be preassembled and mounted together to the vehicle, using the same bracket assembly.

Optionally in some examples, including in at least one preferred example, the first component mounting interface is configured for mounting of the first component on a first side of the component mounting bracket arrangement and the second component mounting interface is configured for mounting of the second component on a second side of the component mounting bracket arrangement, opposite to the first side. A technical benefit may include improved space efficiency by mounting the components on opposite sides. The first component, which may be mounted to a lower side of the bracket assembly, may be a tank, such as a compressed air tank or any other kind of fluid tank. The second component, which may be mounted to an upper side of the bracket assembly, may be a motor, such as an electric steering motor or any other type of motor. During service, the upper component may easily be accessed by bringing the bracket assembly to the tiltable state and thereafter to the rotatable state, without needing to remove the lower component.

Optionally in some examples, including in at least one preferred example, the interface bracket arrangement is configured to be attached to the vehicle structure by a second set of fasteners. A technical benefit may include providing a secure attachment of the bracket assembly to the vehicle structure as well as increased versatility since different fasteners are used for attaching the component mounting bracket arrangement to the interface bracket arrangement and for attaching the interface bracket arrangement to the vehicle structure.

Optionally in some examples, including in at least one preferred example, the second set of fasteners is configured to be accessed from a first side of the bracket assembly, and the first set of fasteners is configured to be accessed from a second side of the bracket assembly, opposite to the first side. A technical benefit may include the possibility to access relevant fasteners from different directions during mounting and service, respectively.

Optionally in some examples, including in at least one preferred example, when mounted to the vehicle structure, the first side is an upper side of the bracket assembly, and the second side is a lower side of the bracket assembly. A technical benefit may include facilitated detachment in connection with service since all relevant fasteners can be accessed from below. The component mounting bracket arrangement may hence be tilted and brought to its rotatable state without having to access any fasteners from above. In connection with mounting, the second set of fasteners many be accessed and tightened from above, which may be more practical during assembly of the vehicle.

Optionally in some examples, including in at least one preferred example, the at least one second hook is configured to protrude in an upward direction from the component mounting bracket arrangement in the fixed state. A technical benefit may include that the at least one second hook may hereby automatically bring the component mounting bracket arrangement to the first fixed intermediate tilt position when the first set of fasteners is released and gravity acts on the component mounting bracket arrangement.

According to a second aspect of the disclosure, a vehicle comprising the bracket assembly of the first aspect is provided. The vehicle may comprise one or two components mounted to a vehicle structure of the vehicle by means of the bracket assembly. The vehicle may be a heavy-duty vehicle such as a bus, a truck, or a construction machine. The components may be an electric motor and a fluid tank.

According to a third aspect of the disclosure, a method for mounting at least one component to a vehicle structure is provided. The method comprises:
providing a bracket assembly of the first aspect,
mounting the at least one component to the component mounting bracket arrangement,
attaching the interface bracket arrangement to the component bracket mounting arrangement by the first set of fasteners,
bringing the at least one first hook into engagement with the vehicle structure, and
attaching the interface bracket arrangement to the vehicle structure.

The third aspect may seek to provide an in at least some aspect improved method for mounting of vehicle components. A technical benefit may include the possibility to preassemble the at least one component, preferably at least two components, and the bracket assembly prior to mounting the preassembled components to the vehicle structure. In this way, the mounting to the vehicle structure may be facilitated. The interface bracket arrangement may be configured to be attached to the vehicle structure using the second set of fasteners, which may be accessed from above.

According to a fourth aspect of the disclosure, a method for servicing at least one component mounted to a vehicle structure by a bracket assembly of the first aspect is provided. The method comprises:
releasing the first set of fasteners to bring the component mounting bracket arrangement with the at least one component mounted thereto to the tiltable state,
pushing the component mounting bracket arrangement with the at least one component mounted thereto away from the stopping member to bring it from the at least one fixed intermediate tilt position to a rotatable state in which the at least one first hook holds the component mounting bracket arrangement to the vehicle structure.

The fourth aspect may seek to provide an in at least some aspect improved method for servicing of vehicle components. A technical benefit may include facilitated service when the vehicle components are accessed from below the vehicle and gravity is used together with the hooks and the stopping member to bring the component bracket arrangement to the rotatable state in a controlled manner.

Optionally in some examples, including in at least one preferred example, the at least one second hook is configured to define at least a first fixed intermediate tilt position and a last fixed intermediate tilt position, and the method comprises:
in the first fixed intermediate tilt position, pushing the component mounting bracket arrangement with the at least one component mounted thereto away from the at least one stopping member to bring the component mounting bracket arrangement to the last fixed intermediate tilt position, and
detaching at least one hose and/or cable from the at least one component in the last fixed intermediate tilt position.

A technical benefit may include utilization of a position in which the component to be serviced is fixed for detaching any hoses and/or cables from the component(s), hence preventing that the cable(s) and/or hose(s) is/are torn off once the bracket assembly is brought to the rotatable state.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is a perspective view of an exemplary vehicle structure and two components mounted using a bracket assembly according to an example.
**FIG. 3** is an exploded perspective view showing a bracket assembly according to an example.
**FIG. 4** is a perspective view of a component mounting bracket arrangement according to an example.
**FIG. 5** is another perspective view of the component mounting bracket arrangement shown in FIG. 4.
**FIG. 6** shows detail views of a bracket assembly according to an example when used for mounting of two components to a vehicle structure.
**FIG. 7** shows detail views of the bracket assembly shown in FIG. 6 in a first fixed intermediate tilt position.
**FIG. 8** shows detail views of the bracket assembly shown in FIG. 6 in a last fixed intermediate tilt position.
**FIG. 9** shows detail views of bringing the bracket assembly shown in FIG. 6 into a rotatable state.
**FIG. 10** is a flow-chart illustrating a method for mounting of at least one component according to an example.
**FIG. 11** is a flow-chart illustrating a method for servicing of at least one component according to an example.

### DETAILED DESCRIPTION

The detailed description set forth below provides information and examples of the disclosed technology with sufficient detail to enable those skilled in the art to practice the disclosure.

Service and maintenance of a single vehicle component often require that other components are demounted in order to access the component to be serviced. This complicates the service process and increases downtime of the vehicle. For example, in some heavy-duty vehicles, a first component may be hidden behind a second component such that the second component needs to be removed in order to access the first component. This may be the case for an electric steering motor mounted above a fluid tank, such as a compressed air tank. Separate anchorage brackets may be used for mounting the two different components to a frame of the vehicle. In order to access the electric steering motor from below the vehicle in connection with service, the fluid tank first needs to be removed, and only thereafter may the electric steering motor be accessed. Furthermore, it may be necessary to use a lifting device in connection with the disassembly, since the components may be heavy and difficult to handle manually.

The present disclosure aims to provide a bracket assembly for mounting of at least one vehicle component, such as two vehicle components, that may facilitate maintenance and service of the mounted component(s).

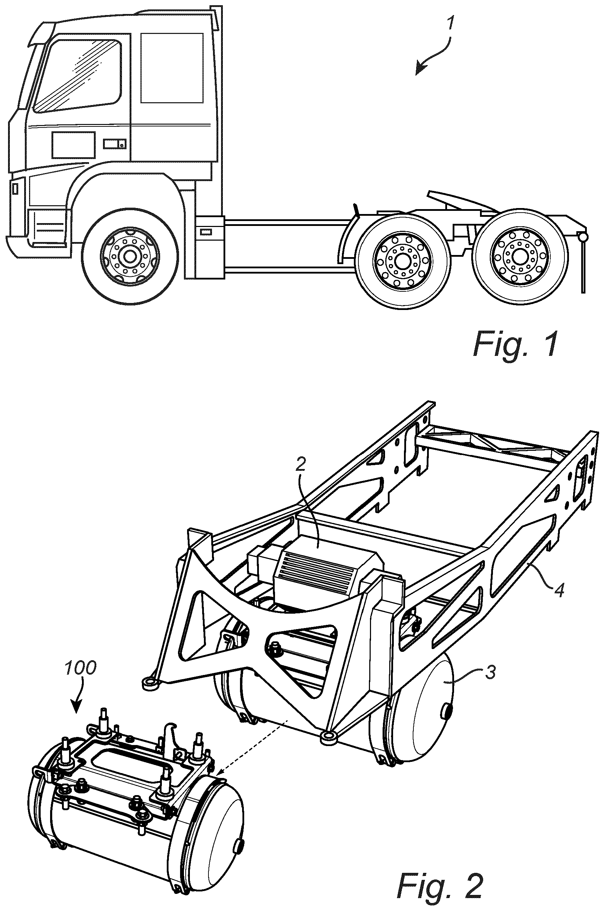

**FIG. 1** is an exemplary vehicle 1 in the form of a heavy-duty towing truck, in which a bracket assembly according to embodiments of the present disclosure may be used for mounting of vehicle components. Although a heavy-duty towing truck is illustrated, the bracket assembly may be used also in other types of vehicles, such as in other heavy-duty vehicles and/or in passenger cars.

**FIG. 2** illustrates a bracket assembly 100 according to an example. In the illustrated example, the bracket assembly 100 is used for mounting of a first component in the form of an electric motor 2, such as an electric steering motor, and a second component in the form of a fluid tank 3, such as an air tank. The motor 2 and the tank 3 are mounted to a vehicle structure 4, such as a vehicle frame, by means of the bracket assembly 100 disposed between the motor 2 and the tank 3. For attaching the electric motor 2 to the bracket assembly 100, a dampening plate 5 is used.

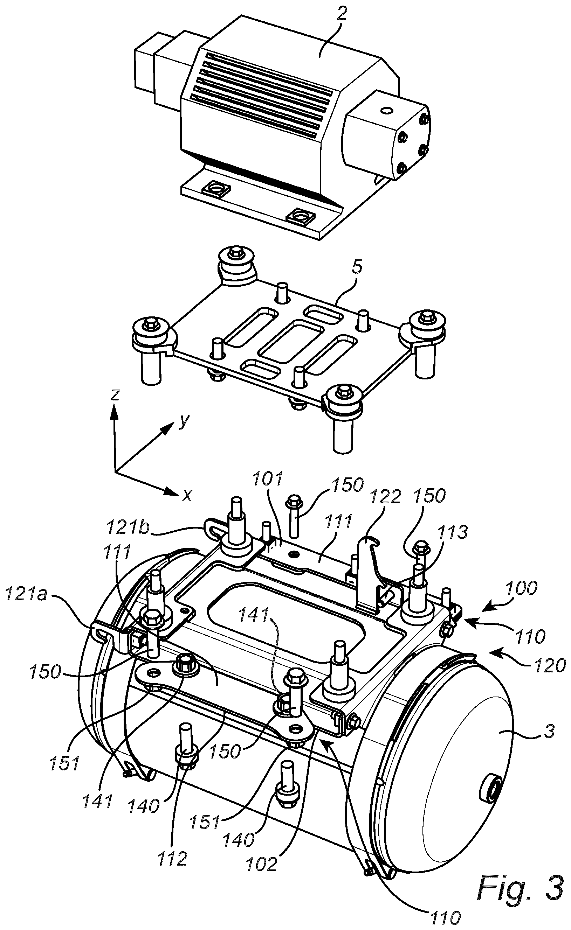

**FIG. 3** illustrates the bracket assembly 100 in greater detail. It comprises on one hand an interface bracket arrangement 110 for attaching the bracket assembly 100 to the vehicle structure 4, and on the other hand a component mounting bracket arrangement 120 for attaching the components 2, 3 to the bracket assembly 100. The component mounting bracket arrangement 120 is configured to be attached to the interface bracket arrangement 110 by a first set of fasteners 140. The interface bracket arrangement 110 is configured to be attached to the vehicle structure 4 by a second set of fasteners 150. The component mounting bracket arrangement 120 is configured to be tiltable with respect to the interface bracket arrangement 110, and hence with respect to the vehicle structure 4, when the interface bracket arrangement 110 is secured to the vehicle structure 4 by the second set of fasteners 150 and when the component mounting bracket arrangement 120 is not fixed to the interface bracket arrangement 110 by the first set of fasteners 140. Hence, the component mounting bracket arrangement 120 is configured to be brought to a fixed state by attaching it to the interface bracket arrangement 110 by the first set of fasteners 140, and to be brought to a tiltable state by releasing the first set of fasteners 140.

In the fixed state, the interface bracket arrangement 110 and the component mounting bracket arrangement 120 both have a main extension parallel with a horizontal xy-plane. The electric motor 2 is disposed above the bracket assembly 100 and the tank 3 is disposed below the bracket assembly 100 along a vertical z-axis, wherein the axes x, y, z are the axes of a cartesian coordinate system. Of course, when mounted to the vehicle structure 4, the xy-plane may deviate from a horizontal direction and the z-axis may be tilted with respect to a vertical direction. However, it is advantageous if the component mounting bracket arrangement 120 is arranged such that it may be tilted downwards with respect to the interface bracket arrangement 110.

The second set of fasteners 150 comprises threaded male fasteners that are accessible from a first, upper side 101 of the bracket assembly 100. The first set of fasteners 140 comprises threaded male fasteners that are accessible from a second, lower side 102 of the bracket assembly 100. A first set of female fastening members 141, configured to engage with the first set of fasteners 140, is disposed on the upper side 101, namely on upper surfaces 111 of the interface bracket arrangement 110. A second set of female fastening members 151, configured to engage with the second set of fasteners 150, is disposed on the lower side 102, namely on lower surfaces 112 of the interface bracket arrangement 110. Any number of fasteners needed to obtain secure attachments may be used.

The component mounting bracket arrangement 120 comprises two first hooks 121a, 121b and one second hook 122 provided at a distance from the first hooks 121a, 121b as measured along the x-axis. The interface bracket arrangement 110 comprises a stopping member 113 configured to engage with the second hook 122 during tilting of the component mounting bracket arrangement 120. In other examples, the component mounting bracket arrangement may comprise a single first hook, or more than two first hooks. In some examples, the component mounting bracket arrangement may comprise more than one second hook, such as two identical second hooks. The interface bracket arrangement may in that case comprise two stopping members, each stopping member being configured to engage with one of the second hooks.

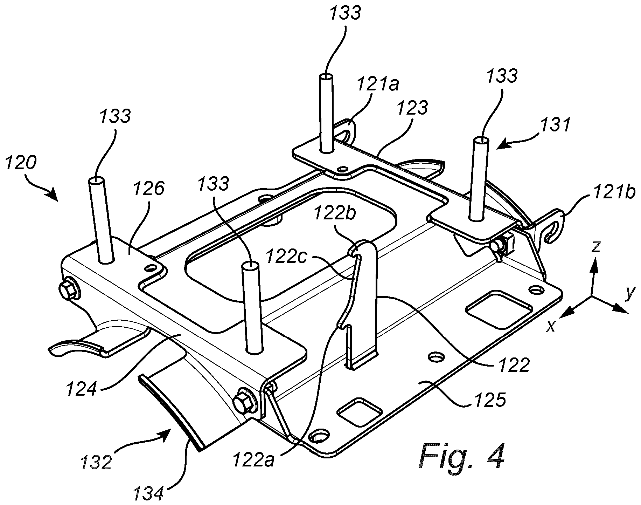

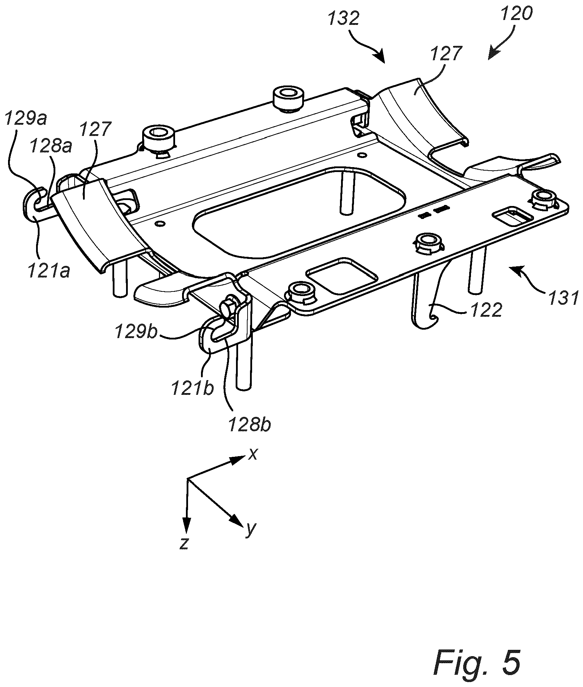

**FIG. 4** and **FIG. 5** illustrate the component mounting bracket arrangement 120 in two different views. The two first hooks 121a, 121b are open hooks disposed on a first end portion 123 of the component mounting bracket arrangement 120, and the second hook 122 is disposed on the component mounting bracket arrangement 120 at a distance from the first end portion 123 as measured along the x-axis, closer to a second end portion 124 of the component mounting bracket arrangement 120. The two first hooks 121a, 121b are spaced apart from one another along the y-axis. The second hook 122 protrudes perpendicularly upwards from an upper contact surface 125 of the component mounting bracket arrangement 125. The contact surface 125 is configured to abut one of the lower surfaces 112 of the interface bracket arrangement 110 in the fixed state of the bracket assembly 100.

The component mounting bracket arrangement 120 comprises a first component mounting interface 131 for mounting of the motor 2 on a first side 126 of the component mounting bracket arrangement 120, and a second component mounting interface 132 for mounting of the tank 3 on a second side 127 of the component mounting bracket arrangement 120, opposite to the first side 126. The first component mounting interface 131 comprises four protruding members 133 to which the damping plate 5 is configured to be mounted, and the second component mounting interface 132 comprises rounded flanges 134 to which the tank 3 is to be mounted using a band or a belt.

The second hook 122 comprises first and second projections 122a, 122b projecting away from the first hooks 121a, 121b along the x-axis. The first and second projections 122a, 122b define first and last fixed intermediate tilt positions. The second hook 122 further comprises a smooth surface 122c connecting the first and second projections 122a, 122b.

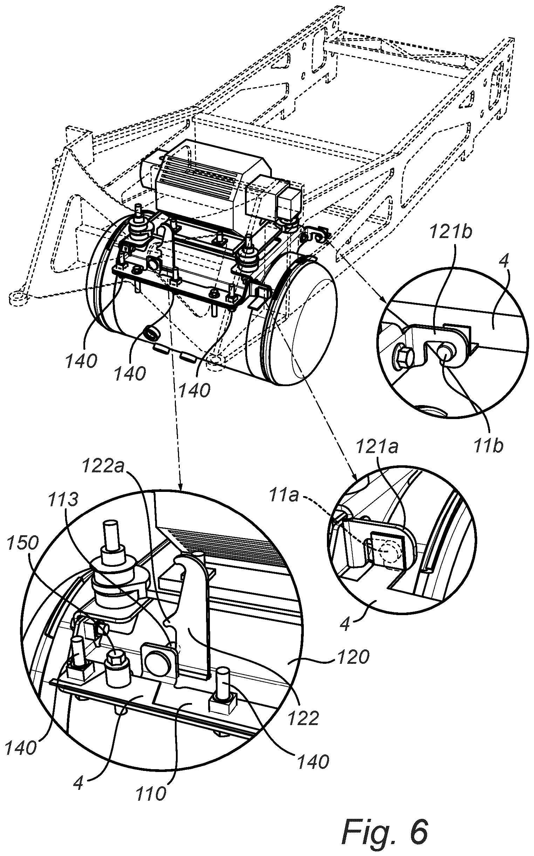

The first hooks 121a, 121b each comprises a linear portion 128a, 128b, extending along the x-axis, and a curved portion 129a, 129b, defining a pivot axis. Tilting of the component mounting bracket arrangement 120 relative to the interface bracket arrangement 110, about the pivot axis defined by the first hooks 121a, 121b, will now be described with reference to **FIGS. 6-9**.

**FIG. 6** illustrates the component mounting bracket arrangement 120 in its fixed state, in which the first set of fasteners 140 attaches the component mounting bracket arrangement 120 to the interface bracket arrangement 110, in turn attached to the vehicle structure 4 by means of the second set of fasteners 150. The first hooks 121a, 121b are in engagement with respective pins 11a, 11b of the vehicle structure 4, in such a way that the first hooks 121a, 121b rest on the pins 11a, 11b, preferably without carrying any weight. The second hook 122 is disposed with its first projection 122a located right above the stopping member 113. When the fasteners 140 are loosened, the component mounting bracket arrangement 120 will be brought to a tiltable state in which the first projection 122a will land on the stopping member 113 as gravity causes the component mounting bracket arrangement 120 to move downwards. The component mounting bracket arrangement 120 hereby moves into a first fixed intermediate tilt position.

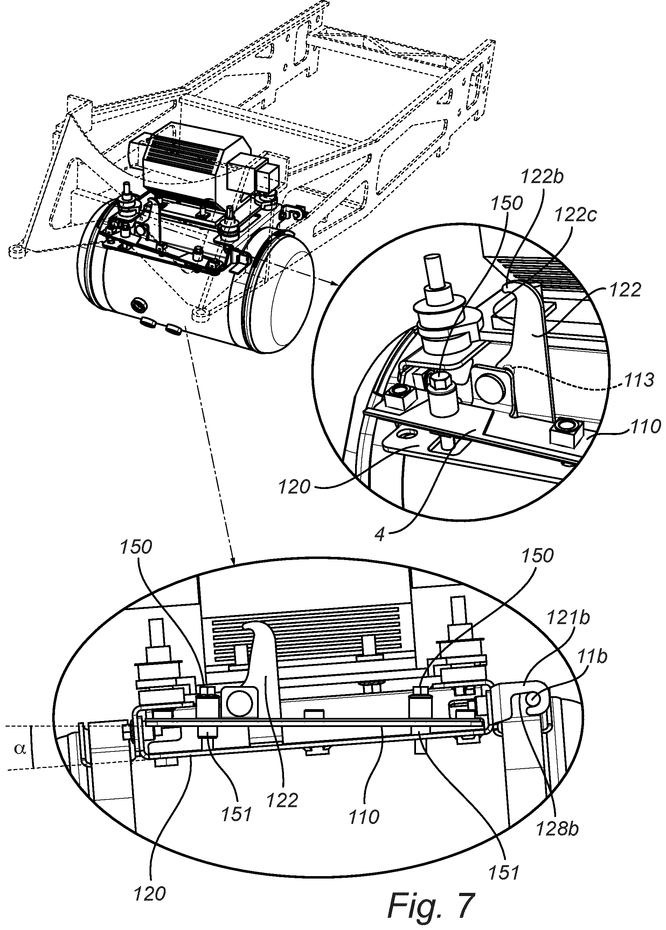

**FIG. 7** illustrates the component mounting bracket arrangement 120 in the first fixed intermediate tilt position, in which the first set of fasteners 140 have been removed, and the first projection 122a of the second hook 122 rests on the stopping member 113. The first hooks 121a, 121b rest on the pins 11a, 11b, respectively. Hence, the weight of the component mounting bracket arrangement 120 and the components 2, 3 mounted thereon is carried by the first hooks 121a, 121b and the first projection 122a of the second hook 122. The component mounting bracket arrangement 120 is tilted relative to the interface bracket arrangement 110 by a tilting angle α, such as an angle of 2-6°, or 3-5°. The second set of fasteners 150 remain attached such that the interface bracket arrangement 110 is fixed to the vehicle structure 4. By pushing the component mounting bracket arrangement 120 such that the first projection 122a of the second hook 122 moves away from the stopping member 113, and such that the linear portions 128a, 128b of the first hooks 121a, 121b slide over the pins 11a, 11b, the component mounting bracket arrangement 120 will continue to move downwards with the stopping member 113 sliding along the smooth surface 122c connecting the first and second projections 122a, 122b. The second projection 122b will thereafter land on the stopping member 113 in a last fixed intermediate tilt position.

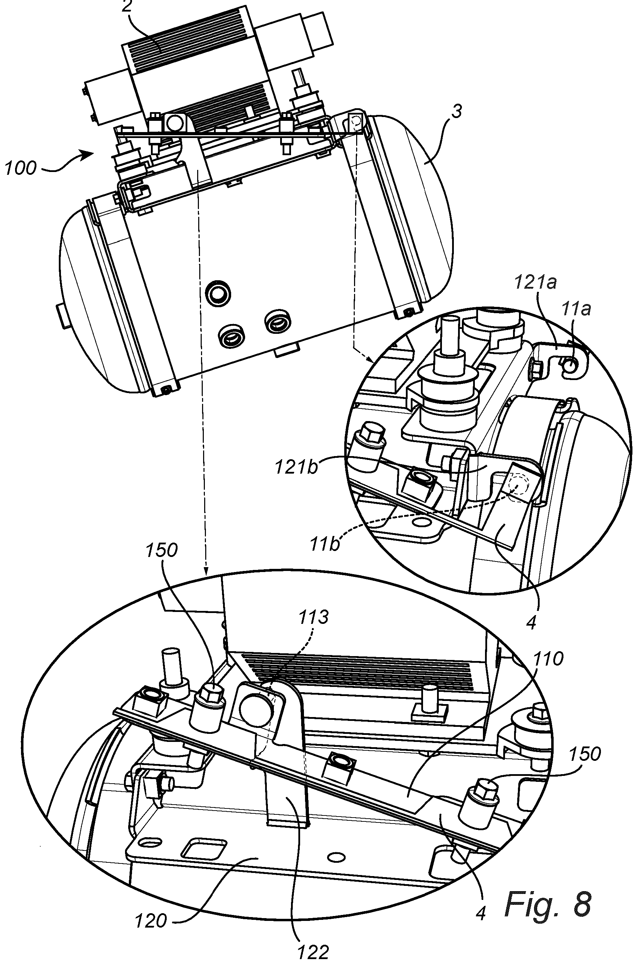

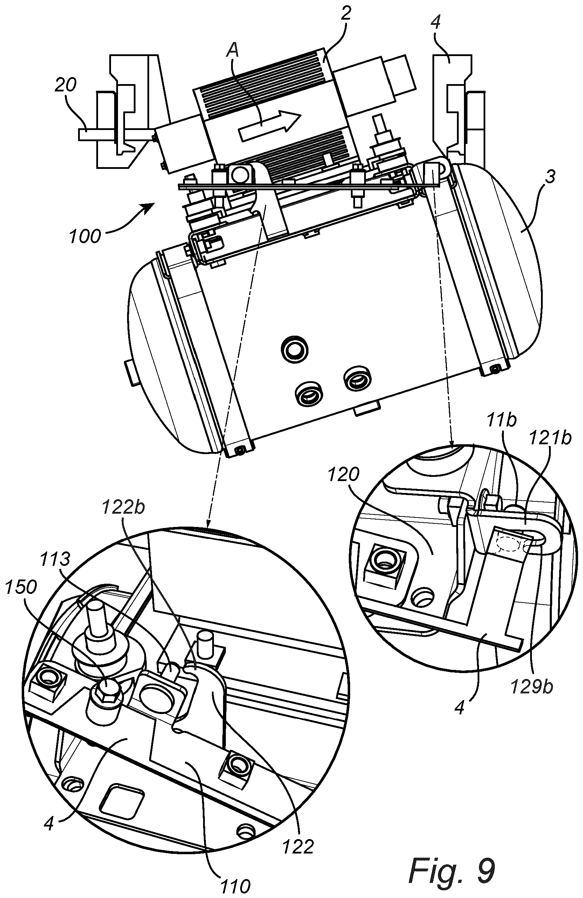

**FIG. 8** illustrates the component mounting bracket arrangement 120 in the last fixed intermediate tilt position, in which the second projection 122b rests on the stopping member 113 and the first hooks 121a, 121b rest on the pins 11a, 11b of the vehicle structure 4, respectively. The tilting angle α may, purely by way of example, be 10-30°, or 15-20°, in the last fixed intermediate tilt position. In the last fixed intermediate tilt position, cables, hoses and similar may be detached from the components 2, 3. A cable 20 is schematically indicated in **FIG. 9****.**

**FIG. 9** illustrates how the component mounting bracket arrangement 120 may be brought into a rotatable state from the last fixed intermediate tilt position, by again pushing the component mounting bracket arrangement 120 in the direction indicated by the arrow A, such that the second projection 122b comes off the stopping member 113 and the linear portions 128a, 128b of the first hooks 121a, 121b slide over the pins 11a, 11b, respectively. As soon as the second projection 122b comes off the stopping member 113, the curved portions 129a, 129b of the first hooks 121a, 121b will engage with the pins 11a, 11b, and the component mounting bracket arrangement 120 will hang from the pins 11a, 11b. Hence, in the rotatable state, all weight is carried by the first hooks 121a, 121b. In the rotatable state, the first hooks 121a, 121b may be configured to enable free rotation of the component mounting bracket arrangement 120 about the pivot axis over an angular range of at least 90°, such that service may be carried out.

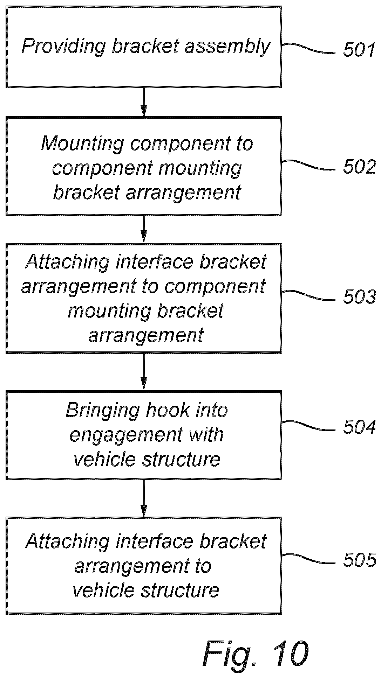

**FIG. 10** illustrates a method for mounting of at least one least one component 2, 3 to a vehicle structure 4. The method comprises the following actions:
**Action 501:** Providing a bracket assembly 100 as described above with reference to FIGS. 1-9.
**Action 502:** Mounting the at least one component 2, 3 to the component mounting bracket arrangement 120. A preassembled kit may hence be formed.
**Action 503:** Attaching the interface bracket arrangement 110 to the component bracket mounting arrangement 120 by the first set of fasteners 140. This may be carried out from above.
**Action 504:** Bringing the first hooks 121a, 121b into engagement with the vehicle structure 4, herein with the pins 11a, 11b.
**Action 505:** Attaching 505 the interface bracket arrangement 110 to the vehicle structure 4 using the second set of fasteners 150.

Of course, it is possible to perform some of the actions in a different order. For example, it may not be necessary to preassemble the components 2, 3 with the bracket assembly 100 prior to mounting it to the vehicle structure 4. Instead, at least one of the components may be mounted to the bracket assembly 100 once it has already been attached to the vehicle structure 4, depending on which is most convenient.

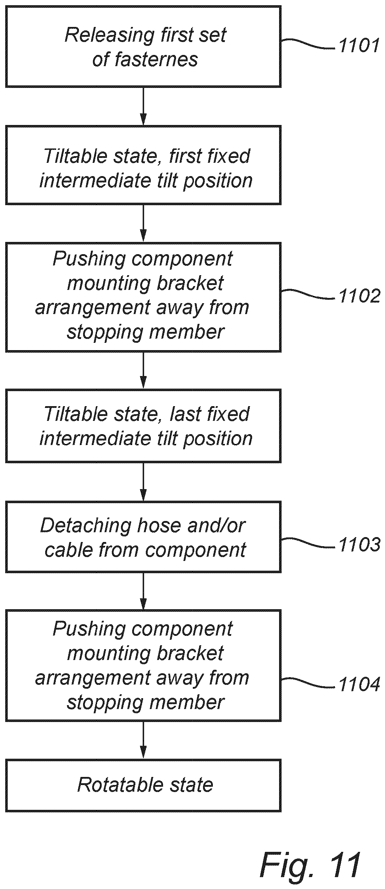

**FIG. 11** illustrates a method for servicing at least one component 2, 3 mounted to a vehicle structure 4 by a bracket assembly 100 as described above with reference to FIGS. 1-9. The method comprises the following actions:
**Action 1101:** Releasing the first set of fasteners 140 to bring the component mounting bracket arrangement 120 with the at least one component 2, 3 mounted thereto to the tiltable state. It is hence automatically brought to the first fixed intermediate tilt position.
**Action 1102:** In the first fixed intermediate tilt position, pushing the component mounting bracket arrangement 120 with the at least one component 2, 3 mounted thereto away from the at least one stopping member 113 to bring the component mounting bracket arrangement 120 to the last fixed intermediate tilt position.
**Action 1103:** Detaching at least one hose and/or cable 20 from the at least one component 2, 3 in the last fixed intermediate tilt position.
**Action 1104:** Pushing the component mounting bracket arrangement 120 with the at least one component 2, 3 mounted thereto away from the stopping member 113 to bring it from the at least one fixed intermediate tilt position to a rotatable state in which the first hooks 121a, 121b hold the component mounting bracket arrangement 120 to the vehicle structure 4. Service may thereafter be carried out on any one of the components 2, 3. In particular, service may be carried out on the electric motor 2 mounted above the tank 3.

In the following, a list of numbered examples of the present disclosure is presented.

Example 1. A bracket assembly (100) for mounting of at least one component (2, 3) to a vehicle structure (4), the bracket assembly (100) comprising:
an interface bracket arrangement (110) for attaching the bracket assembly (100) to the vehicle structure (4), the interface bracket arrangement (110) comprising at least one stopping member (113),
a component mounting bracket arrangement (120) for attaching at least a first component (2) to the bracket assembly (100), wherein at least one first hook (121a, 121b) is disposed on a first end portion (123) of the component mounting bracket arrangement (120), and at least one second hook (122) is disposed on the component mounting bracket arrangement (120) at a distance from the first end portion (123),
wherein the component mounting bracket arrangement (120) is configured to be brought to a fixed state by attaching it to the interface bracket arrangement (110) by a first set of fasteners (140), and to be brought to a tiltable state by releasing the first set of fasteners (140),
wherein, in the tiltable state, the at least one first hook (121a, 121b) is configured to engage with the vehicle structure (4) to enable tilting of the component mounting bracket arrangement (120) relative to the interface bracket arrangement (110) about a pivot axes defined by the at least one first hook (121a, 121b),
wherein the at least one second hook (122) is configured to engage with the at least one stopping member (113) during the tilting of the component mounting bracket arrangement (120) to hold the component mounting bracket arrangement (120) in at least one fixed intermediate tilt position defined by the at least one second hook (122).

Example 2. The bracket assembly of example 1, wherein the at least one second hook (122) is configured to enable disengagement of the at least one second hook (122) from the at least one stopping member (113) to bring the component mounting bracket assembly (120) to a rotatable state in which only the at least one first hook (121a, 121b) is configured to hold the component mounting bracket arrangement (120) to the vehicle structure (4).

Example 3. The bracket assembly of example 2, wherein, in the rotatable state, the at least one first hook (121a, 121b) is configured to enable free rotation of the component mounting bracket arrangement (120) about the pivot axis over an angular range of at least 90°.

Example 4. The bracket assembly of any one of the preceding examples, wherein the at least one second hook (122) is configured to define at least a first fixed intermediate tilt position and a last fixed intermediate tilt position.

Example 5. The bracket assembly of example 4, wherein the first fixed intermediate tilt position is at a tilting angle (α) of 2-6°, preferably 3-5°, and the last fixed intermediate tilt position is at a tilting angle (α) of 10-30°, preferably 15-20°.

Example 6. The bracket assembly of example 4 or 5, wherein the at least one second hook (122) is configured to be disengaged from the at least one stopping member (113) by pushing the component mounting bracket arrangement (120) away from the at least one stopping member (113) when the component mounting bracket arrangement (120) is in the last fixed intermediate tilt position.

Example 7. The bracket assembly of any one of the preceding examples, wherein the at least one second hook (122) is configured to automatically bring the component mounting bracket arrangement (120) to the first fixed intermediate tilt position when the first set of fasteners (140) is released and gravity acts on the component mounting bracket arrangement (120).

Example 8. The bracket assembly of any one of the preceding examples, wherein the at least one second hook (122) protrudes perpendicularly from a contact surface (125) of the component mounting bracket arrangement (120), wherein the contact surface (125) is configured to abut the interface bracket arrangement (110) in the fixed state.

Example 9. The bracket assembly of example 8, wherein each one of the at least one second hook (122) comprises first and second projections (122a, 122b) projecting away from the at least one first hook (121a, 121b), the first and second projections (122a, 122b) defining first and last fixed intermediate tilt positions, respectively.

Example 10. The bracket assembly of example 9, wherein each one of the at least one second hook (122) comprises a smooth surface (122c) connecting the first and second projections (122a, 122b), and wherein the at least one stopping member (113) is configured to slide along the smooth surface (122c) during tilting of the component mounting bracket arrangement (120) from the first to the last fixed intermediate tilt position.

Example 11. The bracket assembly of any one of the preceding examples, wherein the component mounting bracket arrangement (120) comprises a first component mounting interface (131) for mounting of the first component (2), and a second component mounting interface (132) for mounting of a second component (3).

Example 12. The bracket assembly of example 11, wherein the first component mounting interface (131) is configured for mounting of the first component (2) on a first side (126) of the component mounting bracket arrangement (120) and wherein the second component mounting interface (132) is configured for mounting of the second component (3) on a second side (127) of the component mounting bracket arrangement (120), opposite to the first side (126).

Example 13. The bracket assembly of any one of the preceding examples, wherein the interface bracket arrangement (110) is configured to be attached to the vehicle structure (4) by a second set of fasteners (150).

Example 14. The bracket assembly of example 13, wherein the second set of fasteners (150) is configured to be accessed from a first side (101) of the bracket assembly (100), and wherein the first set of fasteners (140) is configured to be accessed from a second side (102) of the bracket assembly (100), opposite to the first side (101).

Example 15. The bracket assembly of example 14, wherein, when mounted to the vehicle structure (4), the first side (101) is an upper side of the bracket assembly (100), and the second side (102) is a lower side of the bracket assembly (100).

Example 16. The bracket assembly of example 15, wherein the at least one second hook (122) is configured to protrude in an upward direction (Z) from the component mounting bracket arrangement (120) in the fixed state.

Example 17. A vehicle (1) comprising the bracket assembly (100) of any one of the preceding examples.

Example 18. A method for mounting of at least one component (2, 3) to a vehicle structure (4), comprising:
- providing (501) a bracket assembly (100) of any one of examples 1-16,
- mounting (502) the at least one component (2, 3) to the component mounting bracket arrangement (120),
- attaching (503) the interface bracket arrangement (110) to the component bracket mounting arrangement (120) by the first set of fasteners (140),
- bringing (504) the at least one first hook (121a, 121b) into engagement with the vehicle structure (4),
- attaching (505) the interface bracket arrangement (110) to the vehicle structure (4).

Example 19. A method for servicing at least one component mounted to a vehicle structure (4) by a bracket assembly (100) of any one of examples 1-15, the method comprising:
- releasing (1101) the first set of fasteners (140) to bring the component mounting bracket arrangement (120) with the at least one component (2, 3) mounted thereto to the tiltable state,
- pushing (1104) the component mounting bracket arrangement (120) with the at least one component (2, 3) mounted thereto away from the stopping member (113) to bring it from the at least one fixed intermediate tilt position to a rotatable state in which the at least one first hook (121a, 121b) holds the component mounting bracket arrangement (120) to the vehicle structure (4).

Example 20. The method of example 19, wherein the at least one second hook (122) is configured to define at least a first fixed intermediate tilt position and a last fixed intermediate tilt position, wherein the method comprises:
- in the first fixed intermediate tilt position, pushing (1102) the component mounting bracket arrangement (120) with the at least one component (2, 3) mounted thereto away from the at least one stopping member (113) to bring the component mounting bracket arrangement (120) to the last fixed intermediate tilt position,
- detaching (1103) at least one hose and/or cable (20) from the at least one component (2, 3) in the last fixed intermediate tilt position.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A bracket assembly (100) for mounting of at least one component (2, 3) to a vehicle structure (4), the bracket assembly (100) comprising:
an interface bracket arrangement (110) for attaching the bracket assembly (100) to the vehicle structure (4), the interface bracket arrangement (110) comprising at least one stopping member (113),
a component mounting bracket arrangement (120) for attaching at least a first component (2) to the bracket assembly (100), wherein at least one first hook (121a, 121b) is disposed on a first end portion (123) of the component mounting bracket arrangement (120), and at least one second hook (122) is disposed on the component mounting bracket arrangement (120) at a distance from the first end portion (123),
wherein the component mounting bracket arrangement (120) is configured to be brought to a fixed state by attaching it to the interface bracket arrangement (110) by a first set of fasteners (140), and to be brought to a tiltable state by releasing the first set of fasteners (140),
wherein, in the tiltable state, the at least one first hook (121a, 121b) is configured to engage with the vehicle structure (4) to enable tilting of the component mounting bracket arrangement (120) relative to the interface bracket arrangement (110) about a pivot axes defined by the at least one first hook (121a, 121b),
wherein the at least one second hook (122) is configured to engage with the at least one stopping member (113) during the tilting of the component mounting bracket arrangement (120) to hold the component mounting bracket arrangement (120) in at least one fixed intermediate tilt position defined by the at least one second hook (122).

2. The bracket assembly of claim 1, wherein the at least one second hook (122) is configured to enable disengagement of the at least one second hook (122) from the at least one stopping member (113) to bring the component mounting bracket assembly (120) to a rotatable state in which only the at least one first hook (121a, 121b) is configured to hold the component mounting bracket arrangement (120) to the vehicle structure (4).

3. The bracket assembly of claim 2, wherein, in the rotatable state, the at least one first hook (121a, 121b) is configured to enable free rotation of the component mounting bracket arrangement (120) about the pivot axis over an angular range of at least 90°.

4. The bracket assembly of any one of the preceding claims, wherein the at least one second hook (122) is configured to define at least a first fixed intermediate tilt position and a last fixed intermediate tilt position.

5. The bracket assembly of claim 4, wherein the at least one second hook (122) is configured to be disengaged from the at least one stopping member (113) by pushing the component mounting bracket arrangement (120) away from the at least one stopping member (113) when the component mounting bracket arrangement (120) is in the last fixed intermediate tilt position.

6. The bracket assembly of any one of the preceding claims, wherein the at least one second hook (122) is configured to automatically bring the component mounting bracket arrangement (120) to the first fixed intermediate tilt position when the first set of fasteners (140) is released and gravity acts on the component mounting bracket arrangement (120).

7. The bracket assembly of any one of the preceding claims, wherein the at least one second hook (122) protrudes perpendicularly from a contact surface (125) of the component mounting bracket arrangement (120), wherein the contact surface (125) is configured to abut the interface bracket arrangement (110) in the fixed state.

8. The bracket assembly of claim 7, wherein each one of the at least one second hook (122) comprises first and second projections (122a, 122b) projecting away from the at least one first hook (121a, 121b), the first and second projections (122a, 122b) defining first and last fixed intermediate tilt positions, respectively.

9. The bracket assembly of any one of the preceding claims, wherein the component mounting bracket arrangement (120) comprises a first component mounting interface (131) for mounting of the first component (2), and a second component mounting interface (132) for mounting of a second component (3).

10. The bracket assembly of claim 9, wherein the first component mounting interface (131) is configured for mounting of the first component (2) on a first side (126) of the component mounting bracket arrangement (120) and wherein the second component mounting interface (132) is configured for mounting of the second component (3) on a second side (127) of the component mounting bracket arrangement (120), opposite to the first side (126).

11. The bracket assembly of any one of the preceding claims, wherein the interface bracket arrangement (110) is configured to be attached to the vehicle structure (4) by a second set of fasteners (150).

12. The bracket assembly of claim 11, wherein the second set of fasteners (150) is configured to be accessed from a first side (101) of the bracket assembly (100), and wherein the first set of fasteners (140) is configured to be accessed from a second side (102) of the bracket assembly (100), opposite to the first side (101), wherein, when mounted to the vehicle structure (4), the first side (101) is an upper side of the bracket assembly (100), and the second side (102) is a lower side of the bracket assembly (100).

13. A vehicle (1) comprising the bracket assembly (100) of any one of the preceding claims.

14. A method for mounting of at least one component (2, 3) to a vehicle structure (4), comprising:
- providing (501) a bracket assembly (100) of any one of claims 1-12,
- mounting (502) the at least one component (2, 3) to the component mounting bracket arrangement (120),
- attaching (503) the interface bracket arrangement (110) to the component bracket mounting arrangement (120) by the first set of fasteners (140),
- bringing (504) the at least one first hook (121a, 121b) into engagement with the vehicle structure (4),
- attaching (505) the interface bracket arrangement (110) to the vehicle structure (4).

15. A method for servicing at least one component mounted to a vehicle structure (4) by a bracket assembly (100) of any one of claims 1-12, the method comprising:
- releasing (1101) the first set of fasteners (140) to bring the component mounting bracket arrangement (120) with the at least one component (2, 3) mounted thereto to the tiltable state,
- pushing (1104) the component mounting bracket arrangement (120) with the at least one component (2, 3) mounted thereto away from the stopping member (113) to bring it from the at least one fixed intermediate tilt position to a rotatable state in which the at least one first hook (121a, 121b) holds the component mounting bracket arrangement (120) to the vehicle structure (4).
